(19) Europäisches Patentamt / European Patent Office / Office européen des brevets

(11) **EP 1 894 663 A2**

(12) **EUROPEAN PATENT APPLICATION**

(43) Date of publication:
**05.03.2008  Bulletin 2008/10**

(51) Int Cl.:
***B23K 26/06*** (2006.01)

(21) Application number: **07405225.9**

(22) Date of filing: **31.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.08.2006 JP 2006232338**

(71) Applicant: **YAMAZAKI MAZAK CORPORATION Niwa-gun Aichi, pref. (JP)**

(72) Inventors:
• **Yamazaki, Tsunehiko**
**Niwa gun**
**Aichi pref. (JP)**
• **Miyakawa, Naoomi**
**Niwa gun**
**Aichi pref. (JP)**

(74) Representative: **Moinas, Michel et al**
**Moinas & Savoye S.A.**
**42 rue Plantamour**
**1201 Genève (CH)**

(54) **System for preventing processing defect in laser processing**

(57)     The invention provides a laser processing system in which a heat density accumulated in a base material is computed based on nesting data in order to create an NC program for preventing processing defects. Upon cutting out works $W_1$ through $W_9$ from a base material $B_1$, a nesting area $N_1$ is defined as a sum of the lengths of lines $S_1$ through $S_4$, which is defined as $NG_1$. A laser processing length dimension of the works $W_1$ through $W_9$ is computed by adding the line lengths $L_1$ through $L_4$ and the circumferential length $C_1$ of a round hole and multiplying the result by nine, which is defined as $LG_1$. The heat density $HF_1$ is computed as $HF_1 = LG_1/NG_1$, and the heat density is compared with a parameter set in advance in order to determine a processing order for preventing processing defects by heat and to create a corresponding program.

Fig. 4

EP 1 894 663 A2

**Description**

BACKGROUND OF THE INVENTION

Field of the invention

The present invention relates to a system for preventing processing defects caused by the influence of thermal accumulation occurring during laser processing.

Description of the related art

In laser processing, when a work base material is subjected to laser processing, heat caused by the laser processing is accumulated in the work material remaining on the table. When the temperature of the portion of the work material to be newly subjected to laser processing exceeds a predetermined value, it will not be possible to realize a good processing even when laser beam is irradiated to the portion, and processing defects may be caused thereby.

Japanese Patent Application Laid-Open Publication No. 2005-334919 (patent document 1), which was filed by the present applicant, discloses a system for changing the procedure of processing based on nesting data, so as to prevent thermal influence.

SUMMARY OF THE INVENTION

The object of the present invention is to provide a more effective system for preventing processing defect in laser processing by adding to the proposed system mentioned above the algorithm of heat density.

In order to achieve the above object, the present invention provides a system comprising a step of providing a nesting area based on nesting data and defining a length dimension surrounding the area as nesting area dimension $NG_1$; a step of computing a total length dimension of laser processing to be performed to all the works and for defining a total processing length dimension $LG_1$; a step of computing a heat density $HF_1$ as $HF_1 = LG_1/NG_1$; a step of comparing the computed heat density $HF_1$ with a parameter set in advance; and a step of creating a program by setting a processing order of works based on the compared result.

Further, the parameter is determined by the material and plate thickness of the base material.

The system can further comprise a step of setting a heat zone subjected to thermal influence generated during processing to areas along both sides of a processing path; and a step of creating a processing program by setting a processing order of works so that the heat zone does not intervene.

Moreover, if it is not possible to prevent the heat zone from intervening even when the processing order of works is optimized, a cooling standby time which is the time until the processing can be resumed is set to the processing program; and if the cooling standby time is included in the processing program, the system further comprises a step of outputting a warning notifying that a processing defect may occur.

According to the present invention, it becomes possible to prevent processing defects by predicting the thermal influence more accurately.

BRIEF DESCRIPTION OF THE DRAWINGS

FIG. 1 is an explanatory view illustrating the order for performing nesting upon subjecting a metal plate base material to laser processing;

FIG. 2 is an explanatory view showing the state in which nine works are nested within a nesting area of the base material;

FIG. 3 is a flow chart of a process according to the present system;

FIG. 4 is an explanatory view showing the processing order taking the heat zone into consideration; and

FIG. 5 is an output screen for warning the occurrence of processing defects caused by thermal influence.

DETAILED DESCRIPTION OF THE PREFERRED EMBODIMENTS

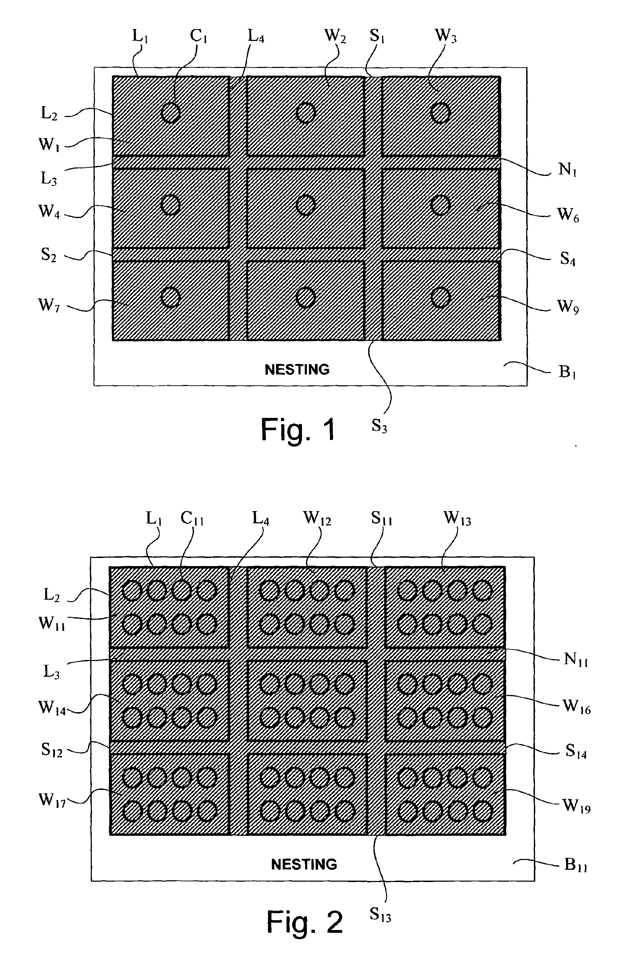

FIG. 1 shows a process for performing nesting upon subjecting a plate-shaped metal base material $B_1$ to laser processing.

It illustrates a case in which nine works $W_1$ through $W_9$ are nested within a nesting area $N_1$ shown as a shaded area.

In the illustrated example, the first work $W_1$ has a rectangular outer shape with a single round hole formed to the center area thereof. In this example, the length of laser processing to be provided to the first work $W_1$ corresponds to the length dimension of the outer peripheral sides of the work and the circumferential length of the round hole.

The length dimension of the outer peripheral sides of the work is the dimension corresponding to the total length dimension of the four sides $L_1$, $L_2$, $L_3$ and $L_4$, and the dimension of the round hole is the circumferential length $C_1$ of the hole.

In the embodiment of FIG. 1, nine pieces of works having the same shape are nested on the base material $B_1$ and subjected to laser processing. Here, the total processing dimension $LG_1$ corresponds to the length dimension obtained by multiplying the processing length of a single work $W_1$ by nine.

Next, the nesting area $N_1$ is the area surrounded by four sides shown by solid line $S_1$, $S_2$, $S_3$ and $S_4$. The length dimension obtained by adding the lengths of four sides $S_1$, $S_2$, $S_3$ and $S_4$ is the nesting area dimension $NG_1$.

In the present invention, the ratio of $LG_1$ to $NG_1$ is defined as heat density ($HF_1$), which is computed as follows:

$$HF_1 \ (heat \ density) = LG_1/NG_1 \quad ... \ (expression \ 1)$$

FIG. 2 illustrates a state in which nine works $W_{11}$ through $W_{19}$ are nested within a nesting area $N_{11}$ of a base material $B_{11}$.

The first work $W_{11}$ has a rectangular shape surrounded by four sides $L_{11}$, $L_{12}$, $L_{13}$ and $L_{14}$, having eight round holes $C_{11}$ formed thereto.

Therefore, the total processing length $LG_{11}$ of the first work $W_{11}$ is the sum of the lengths of four sides $L_{11}$, $L_{12}$, $L_{13}$ and $L_{14}$ plus the length obtained by multiplying the circumferential dimension $C_{11}$ by eight.

Similarly, the nesting area $N_{11}$ can be expressed as the length dimension $NG_{11}$ obtained by adding the lengths of four sides $S_{11}$, $S_{12}$, $S_{13}$ and $S_{14}$.

The heat density $HF_{11}$ in the nesting illustrated in FIG. 2 can be computed as follows:

$$HF_{11} = LG_{11}/NG_{11} \quad ... \ (expression \ 2)$$

Upon comparing the nesting of FIG. 1 with the nesting of FIG. 2, it is assumed that the four sides $L_1$, $L_2$, $L_3$ and $L_4$ of work $W_1$ is equal to the four sides $L_{11}$, $L_{12}$, $L_{13}$ and $L_{14}$ of work $W_{11}$, and the dimension of the round hole $C_1$ is equal to the dimension of the round hole $C_{11}$. Then, the processing length dimension $LG_{11}$ of the work $W_{11}$ is longer corresponding to the increased number of round holes compared to the processing length dimension $LG_1$ of the work $W_1$.

Similarly, when assuming that the nesting dimension $NG_1$ of FIG. 1 and the nesting dimension $NG_{11}$ of FIG. 2 are substantially the same, then

$$HF_{11} > HF_1.$$

The present invention provides a system for preventing in advance the occurrence of laser processing defects by computing the above-mentioned heat density.

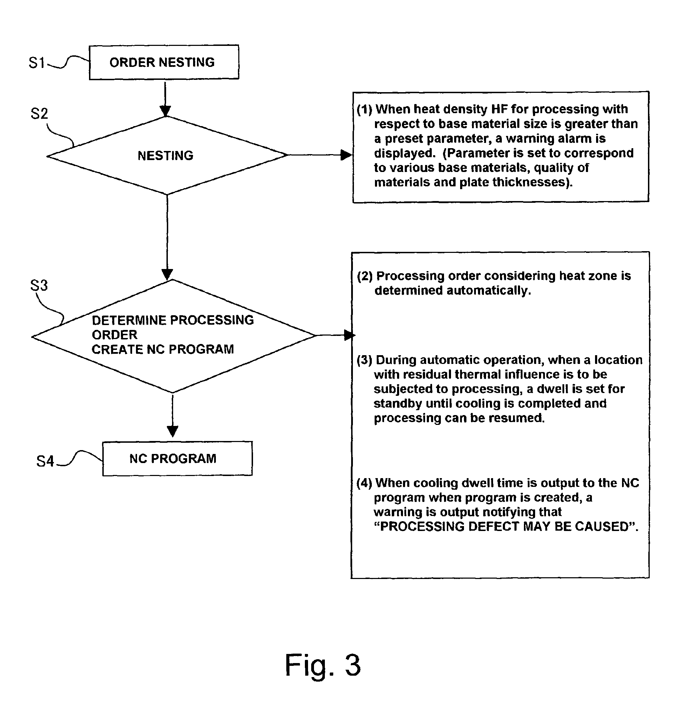

FIG. 3 is a flowchart of the process according to the system of the present invention.

When a nesting order is provided in step S1, the nesting is performed in step S2.

In the nesting step, the heat density HF described in FIGS. 1 and 2 is computed based on the nesting data. Then, when it is determined that the heat density HF is greater than a predetermined parameter, a warning alarm is displayed. The parameter is determined based on the material quality, the plate thickness and the like of the base material.

Next, in step S3, the processing order is set taking the heat zone into consideration.

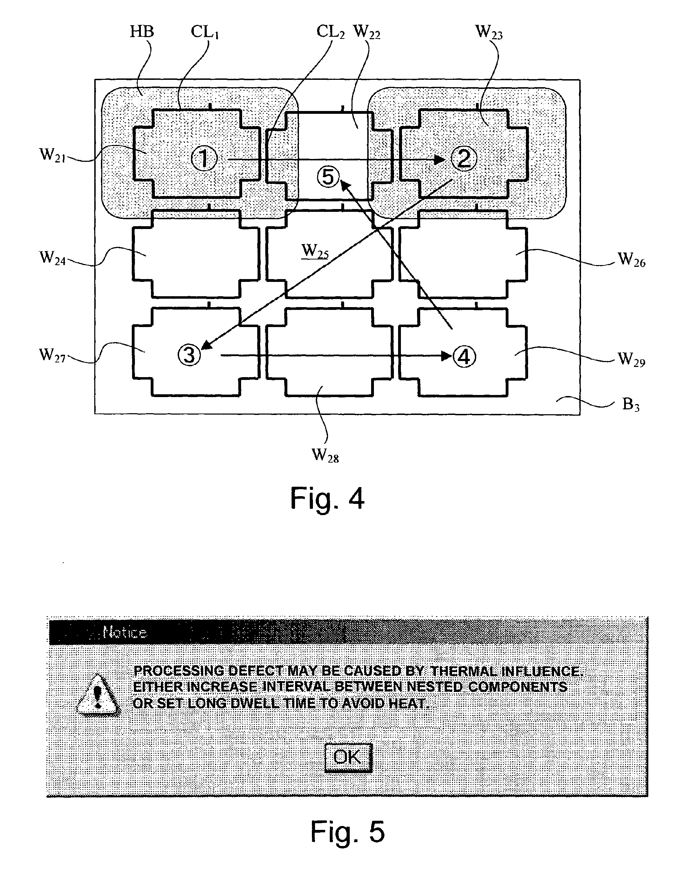

FIG. 4 illustrates the processing order taking the heat zone into consideration.

FIG. 4 illustrates the state in which nine works $W_{21}$ through $W_{29}$ are nested on a base material $B_3$. Each work is illustrated as the same member having a cutting line $CL_1$ by laser. A heat zone HB which is a heat-affected zone is set to both sides of the cutting line $CL_1$. The heat zone HB is determined by the material, the plate thickness, the cutting speed and the like of the base material.

If the processing order does not take the heat zone HB into consideration, it is efficient to process adjacent works $W_{21}$, $W_{22}$, $W_{23}$, $W_{24}$ through $W_{29}$ in the named order, since the moving distance becomes shortest.

However, if the heat zone HB of the first work $W_{21}$ interposes with a portion of the cutting line $CL_2$ of the second work $W_{22}$ adjacent thereto, processing defects may occur at the interposed portion.

In such case, the processing of the adjacent second work $W_{22}$ is skipped, and the third work $W_{23}$ is processed secondly. Then, the seventh work $W_{27}$ is processed thirdly, and the ninth work $W_{29}$ is processed fourthly. During this time, the heat zone of the second work $W_{22}$ is cooled by heat radiation and disappears.

Then, after processing the ninth work $W_{29}$, the processing returns to the second work $W_{22}$.

Thereafter, all the works are subjected to processing in a similarly determined processing order.

Even when the processing order is determined considering the heat zone as described earlier, there are cases in which the lack of heat radiation time results in residual thermal influence. If such location is subjected to processing, a dwell command is output and the processing machine enters a standby status until the processing can be resumed.

Moreover, upon creating an NC program in step S3, if the dwell time for cooling is output on the program, a warning illustrated in FIG. 5 is output notifying that "PROCESSING DEFECT MAY BE CAUSED BY THERMAL INFLUENCE. EITHER INCREASE INTERVAL BETWEEN NESTED COMPONENTS OR SET LONG DWELL TIME TO AVOID HEAT".

After performing the above-mentioned process, an NC program is created in step S4.

**Claims**

1. A system for preventing processing defect in laser processing upon creating a processing program for processing a work from a base material via laser processing, comprising:

   a step of providing a nesting area based on nesting data and defining a length dimension surrounding the area as nesting area dimension $NG_1$;
   a step of computing a total length dimension of laser processing to be performed to all the works and for defining a total processing length dimension $LG_1$;
   a step of computing a heat density $HF_1$ as $HF_1 = LG_1/NG_1$;
   a step of comparing the computed heat density $HF_1$ with a parameter set in advance; and
   a step of creating a program by setting a processing order of works based on the compared result.

2. The system for preventing processing defect in laser processing according to claim 1, wherein the parameter is determined by the material and plate thickness of the base material.

3. A system for preventing processing defect in laser processing upon creating a processing program for processing a work from a base material via laser processing, comprising:

   a step of providing a nesting area based on nesting data and defining a length dimension surrounding the area as nesting area dimension $NG_1$;
   a step of computing a total length dimension of laser processing to be performed to all the works and for defining a total processing length dimension $LG_1$;
   a step of computing a heat density $HF_1$ as $HF_1 = LG_1/NG_1$;
   a step of comparing the computed heat density $HF_1$ with a parameter set in advance;
   a step of creating a program by setting a processing order of works based on the compared result;
   a step of setting a heat zone subjected to thermal influence generated during processing to areas along both sides of a processing path; and
   a step of creating a processing program by setting a processing order of works so that the heat zone does not intervene.

4. The system for preventing processing defect in laser processing according to claim 3, wherein if it is not possible to prevent the heat zone from intervening even when the processing order of works is optimized, a cooling standby time which is the time until the processing can be resumed is set to the processing program.

5. The system for preventing processing defect in laser processing according to claim 4, wherein if the cooling standby time is included in the processing program, the system further comprises a step of outputting a warning notifying that a processing defect may occur.

$L_1$ $C_1$ $L_4$ $W_2$ $S_1$ $W_3$

$L_2$

$W_1$

$L_3$

$W_4$

$S_2$

$W_7$

$N_1$

$W_6$

$S_4$

$W_9$

NESTING

$B_1$

**Fig. 1** $S_3$

$L_1$ $C_{11}$ $L_4$ $W_{12}$ $S_{11}$ $W_{13}$

$L_2$

$W_{11}$

$L_3$

$W_{14}$

$S_{12}$

$W_{17}$

$N_{11}$

$W_{16}$

$S_{14}$

$W_{19}$

NESTING

$B_{11}$

**Fig. 2** $S_{13}$

S1 ⌇ ORDER NESTING

S2

NESTING

(1) When heat density HF for processing with respect to base material size is greater than a preset parameter, a warning alarm is displayed. (Parameter is set to correspond to various base materials, quality of materials and plate thicknesses).

S3

DETERMINE PROCESSING ORDER
CREATE NC PROGRAM

(2) Processing order considering heat zone is determined automatically.

(3) During automatic operation, when a location with residual thermal influence is to be subjected to processing, a dwell is set for standby until cooling is completed and processing can be resumed.

S4 ⌇ NC PROGRAM

(4) When cooling dwell time is output to the NC program when program is created, a warning is output notifying that "PROCESSING DEFECT MAY BE CAUSED".

Fig. 3

Fig. 4

Notice

PROCESSING DEFECT MAY BE CAUSED BY THERMAL INFLUENCE. EITHER INCREASE INTERVAL BETWEEN NESTED COMPONENTS OR SET LONG DWELL TIME TO AVOID HEAT.

OK

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005334919 A